# EUROPEAN PATENT APPLICATION

(11) **EP 4 557 336 A1**
(43) Date of publication of application: **21.05.2025**
(21) Application number: 24210567.4
(22) Date of filing: 04.11.2024
(51) Int. Cl.: H01G 4/232, H01G 4/30

(54) **MULTILAYER ELECTRONIC COMPONENT**

(30) Priority: 16.11.2023 KR 20230159463; 08.02.2024 KR 20240019765
(71) Applicant: Samsung Electro-Mechanics Co., Ltd., Suwon-si, Gyeonggi-do (KR)
(72) Inventor: Kim, Kyo Sik, Suwon-si, Gyeonggi-do (KR); Yoo, Seon Young, Suwon-si, Gyeonggi-do (KR)
(74) Representative: Grünecker Patent- und Rechtsanwälte PartG mbB

(57) **Abstract**

A multilayer electronic component may include: a body including a dielectric layer and an internal electrode alternately disposed with the dielectric layer, the body and an external electrode disposed on the body. The third and fourth surfaces of the body, opposing each other in a second direction, may include an exposed portion and a non-exposed portion other than the exposed portion. The external electrode may include a base electrode layer including a metal disposed on the exposed and non-exposed portions. An intermediate electrode layer disposed on the base electrode layer disposed in the non-exposed portion. An upper electrode layer disposed on the intermediate electrode layer in the non-exposed portion. The intermediate electrode layer may include a metal and a resin, and the upper electrode layer may include Sn and a resin.

## Description

### CROSS-REFERENCE TO RELATED APPLICATION(S)

This application claims the benefit of priority to Korean Patent Application Nos. 10-2023-0159463 filed on November 16, 2023 and 10-2024-0019765 filed on February 8, 2024 in the Korean Intellectual Property Office, the disclosures of which are incorporated herein by reference in its entirety.

### TECHNICAL FIELD

The present disclosure relates to a multilayer electronic component.

A multilayer ceramic capacitor (MLCC), a multilayer electronic component, may be a chip-type condenser mounted on the printed circuit boards of any of various electronic products, such as an imaging device, a display device, including a liquid crystal display (LCD) or a plasma display panel (PDP), a computer, a smartphone, or a mobile phone, serving to charge or discharge electricity therein or therefrom.

The multilayer ceramic capacitor has a small size, implements high capacitance and is easily mounted on a board, and may thus be used as a component of various electronic devices. As various electronic devices such as computers, mobile devices, and the like have a smaller size and higher output, demand for miniaturization and higher capacitance in the multilayer ceramic capacitor is increasing.

In addition, as application to automotive electrical components increases, high reliability in various environments is required.

A sintered electrode formed by applying and sintering a paste including a conductive metal and glass is generally used as an external electrode of a multilayer ceramic capacitor.

However, in the case of sintered electrodes, there may be a problem of vulnerability to cracks caused by tensile stress occurring in a mechanical or thermal environment. Accordingly, a technology for applying a conductive resin layer to an external electrode has been disclosed in order to absorb tensile stress generated in a mechanical or thermal environment and prevent cracking caused by stress.

The conductive resin layer serves to electrically and mechanically bond the sintered electrode of the external electrode of the multilayer ceramic capacitor to a plating layer, and serves to protect the multilayer ceramic capacitor from mechanical and thermal stress due to a process temperature and bending impacts of a board during mounting of a circuit board.

However, since conductive particles in the conductive resin layer are in a dispersed form, it forms a polymer-metal bond with weak adhesion to the sintered electrode, which may cause lifting or peeling at the interface. In addition, a problem of weak electrical conductivity may occur with the conductive particles in the condcutive resin layer dispersed.

In addition, since the sintered electrode and conductive resin layer are generally formed using a dipping method, a thickness of a corner portion may become thin, and thus, there may be a risk that moisture resistance reliability may deteriorate or equivalent series resistance (ESR) may increase.

### SUMMARY

An aspect of the present disclosure is to provide a multilayer electronic component having excellent reliability.

An aspect of the present disclosure is to provide a multilayer electronic component having excellent moisture resistance reliability.

An aspect of the present disclosure is to provide a multilayer electronic component having low equivalent series resistance (ESR).

An aspect of the present disclosure is to provide a multilayer electronic component having excellent bending strength.

However, the purpose of the present disclosure is not limited to the above-described content, and may be more easily understood in the process of explaining specific embodiments of the present disclosure.

According to an aspect of the present disclosure, a multilayer electronic component may include: a body including a dielectric layer and an internal electrode alternately disposed with the dielectric layer, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction; and an external electrode disposed on the body, wherein the third and fourth surfaces of the body may include an exposed portion in which the dielectric layer and the internal electrode are alternately exposed and a non-exposed portion other than the exposed portion, the external electrode may include a base electrode layer, an intermediate electrode layer disposed on the base electrode layer, and an upper electrode layer disposed on the intermediate electrode layer, the base electrode layer may be disposed on the exposed portion and the non-exposed portion, the intermediate electrode layer may be disposed on the non-exposed portion, and the upper electrode layer may be disposed on the non-exposed portion, and the base electrode layer may include a metal, the intermediate electrode layer may include a metal and a resin, and the upper electrode layer may include Sn and a resin.

### BRIEF DESCRIPTION OF DRAWINGS

The above and other aspects, features, and advantages of the present disclosure will be more clearly understood from the following detailed description, taken in conjunction with the accompanying drawings.
FIG. 1 schematically illustrates a perspective view of a multilayer electronic component according to an embodiment of the present disclosure.
FIG. 2 schematically illustrates a cross-sectional view taken along line I-I' of FIG. 1.
FIG. 3 schematically illustrates a cross-sectional view taken along line II-II' of FIG. 1.
FIG. 4 is an exploded perspective view illustrating the body of FIG. 1 in a disassembled state.
FIG. 5 is an enlarged view of a first external electrode in FIG. 2.
FIG. 6 is an enlarged view illustrating area K1 of FIG. 2.
FIG. 7 is an enlarged view illustrating area K2 of FIG. 2.
FIG. 8 is an enlarged view illustrating the area K1 of FIG. 2.
FIG. 9 is an enlarged view illustrating the area K1 of FIG. 2.
FIG. 10 is an image of the area K2 of FIG. 2 scanned with a scanning electron microscope.
FIG. 11(a) is an enlarged image of area K3 of FIG. 10, FIG. 11(b) is an image of a content of Ag element analyzed by SEM-EDS in the area K3 of FIG. 10, and FIG. 11(c) is an image of a content of Cu element analyzed by SEM-EDS in the area K3 of FIG. 10.
FIG. 12 is an image of the area K1 of FIG. 2 scanned with a scanning electron microscope.
FIG. 13(a) is an enlarged image of area K4 of FIG. 12, FIG. 13(b) is an image of a content of Ag element analyzed by SEM-EDS in the area K4 of FIG. 12, FIG. 13(c) is an image of a content of Cu element analyzed by SEM-EDS in the area K4 of FIG. 12, and FIG. 13(d) is an image of a content of Sn element analyzed by SEM-EDS in the area K4 of FIG. 12.
FIG. 14 is a diagram corresponding to FIG. 2 according to an embodiment of the present disclosure.
FIG. 15 is a diagram corresponding to FIG. 2 according to an embodiment of the present disclosure.

### DETAILED DESCRIPTION

Hereinafter, embodiments of the present disclosure will be described as follows with reference to the attached drawings. The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art. Accordingly, shapes and sizes of elements in the drawings may be exaggerated for clear description, and elements indicated by the same reference numerals are the same elements in the drawings.

In the drawings, irrelevant descriptions will be omitted to clearly describe the present disclosure, and to clearly express a plurality of layers and areas, thicknesses may be magnified. The same elements having the same function within the scope of the same concept will be described with use of the same reference numerals. Throughout the specification, when a component is referred to as "comprise" or "comprising," it means that it may further include other components as well, rather than excluding other components, unless specifically stated otherwise.

In the drawings, a first direction may refer to a stacking direction or a thickness (T) direction, a second direction may refer to a length (L) direction, and a third direction may refer to a width (W) direction.

### Multilayer electronic component

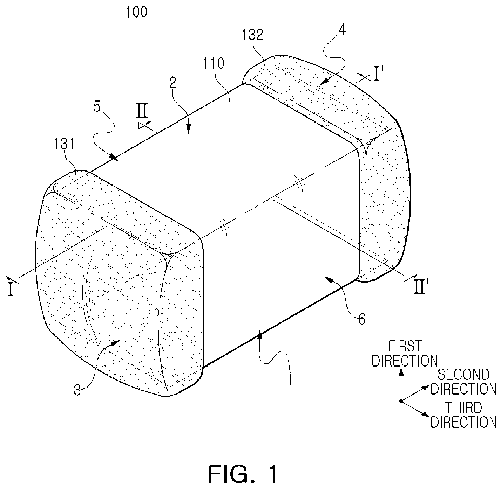

FIG. 1 schematically illustrates a perspective view of a multilayer electronic component according to an embodiment of the present disclosure.

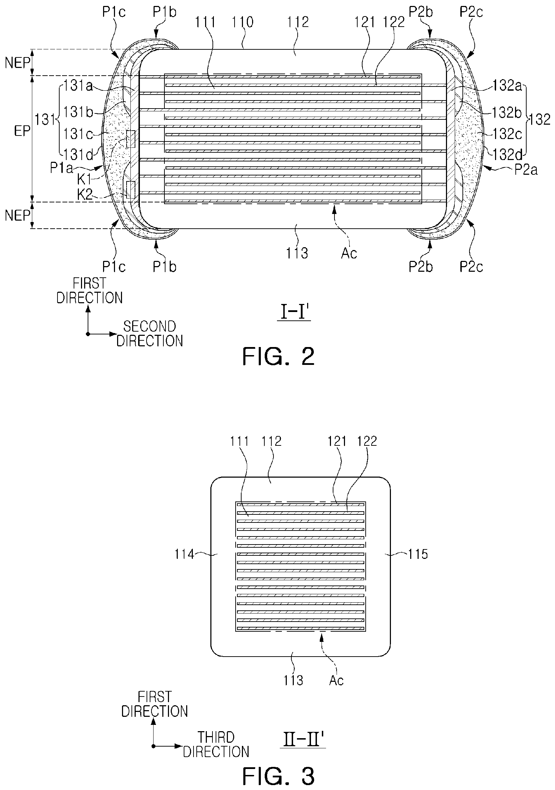

FIG. 2 schematically illustrates a cross-sectional view taken along line I-I' of FIG. 1.

FIG. 3 schematically illustrates a cross-sectional view taken along line II-II' of FIG. 1.

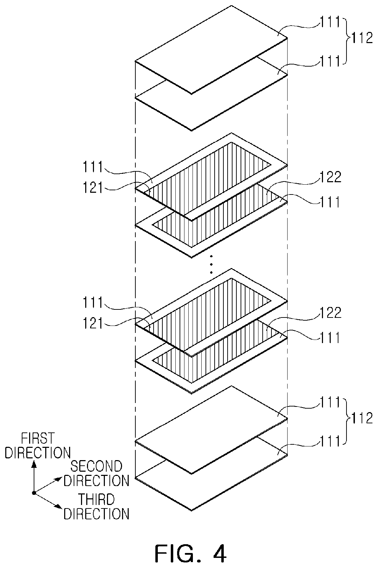

FIG. 4 is an exploded perspective view illustrating the body of FIG. 1 in a disassembled state.

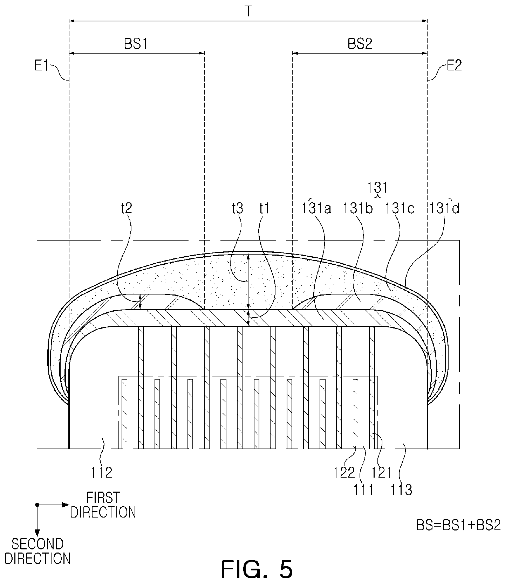

FIG. 5 is an enlarged view of a first external electrode in FIG. 2.

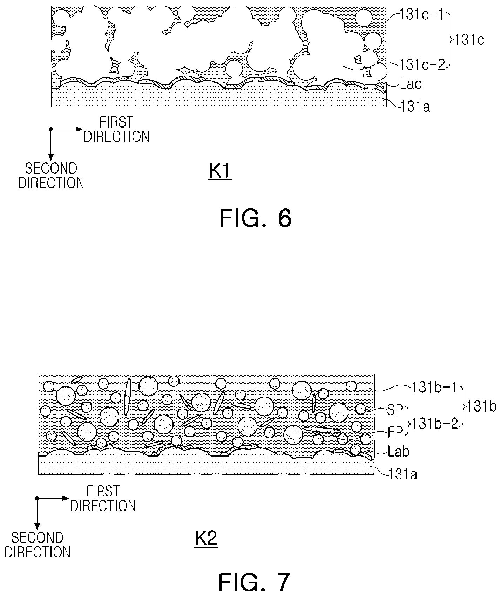

FIG. 6 is an enlarged view illustrating area K1 of FIG. 2.

FIG. 7 is an enlarged view illustrating area K2 of FIG. 2.

Hereinafter, a multilayer electronic component 100 according to an embodiment of the present disclosure will be described in detail with reference to FIGS. 1 to 7. A multilayer ceramic capacitor will be described as an example of a multilayer electronic component, but the present disclosure is not limited thereto, and may also be applied to various multilayer electronic components using a ceramic material, such as an inductor, a piezoelectric element, a varistor, a thermistor, or the like.

The multilayer electronic component 100 according to an embodiment of the present disclosure may include a body 110 including a dielectric layer 111 and internal electrodes 121 and 122 alternately disposed with the dielectric layer, the body 110 having first and second surfaces 1 and 2 opposing each other in a first direction, third and fourth surfaces 3 and 4 connected to the first and second surfaces and opposing each other in a second direction, and fifth and sixth surfaces 5 and 6 connected to the first to fourth surfaces and opposing each other in a third direction; and external electrodes 131 and 132 disposed on the body, wherein the third and fourth surfaces may include an exposed portion EP in which the dielectric layer and the internal electrodes are alternately exposed and a non-exposed portion NEP other than the exposed portion, the external electrodes may include base electrode layers 131a and 132a, intermediate electrode layers 131b and 132b disposed on the base electrode layers, and upper electrode layers 131c and 132c disposed on the intermediate electrode layers, the base electrode layers 131a and 132a may be disposed on the exposed portion EP and the non-exposed portion NEP, the intermediate electrode layers 131b and 132b may be disposed on the non-exposed portion NEP, and the upper electrode layers 131c and 132c may be disposed on the non-exposed portion NEP, and the base electrode layers 131a and 132a may include a metal, the intermediate electrode layers 131b and 132b may include a metal and a resin, and the upper electrode layers 131c and 132c may include Sn and a resin.

Hereinafter, each component included in the multilayer electronic component 100 according to an embodiment of the present invention will be described.

The body 110 has a dielectric layer 111 and internal electrodes 121 and 122, alternately stacked therein.

The body 110 is not limited to a particular shape, and may have a hexahedral shape or a shape similar to the hexahedral shape, as illustrated in the drawings. The body 110 may not have a hexahedral shape having perfectly straight lines because ceramic powder particles included in the body 110 are contracted in a process in which the body is sintered. However, the body 110 may have a substantially hexahedral shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first and second surfaces 1 and 2, connected to the third and fourth surfaces 3 and 4, and opposing each other in the third direction. The first surface 1 may be a mounting surface disposed to oppose a substrate when mounted on the substrate.

As a margin region, in which the internal electrodes 121 and 122 are not disposed, overlaps the dielectric layer 111, a step may be formed by thicknesses of the internal electrodes 121 and 122, so that a corner connecting the first surface 1 to the third to fifth surfaces 3, 4, 5, and 6, and/or a corner connecting the second surface 2 to the third to fifth surfaces 3, 4, 5, and 6 may have a shape contracted to a center of the body 110 in the first direction when viewed with respect to the first surface or the second surface. Alternatively, by contraction behavior during a sintering process of the body, a corner connecting the first surface 1 and the third to sixth surfaces 3, 4, 5, and 6 and/or a corner connecting the second surface 2 and the third to sixth surfaces 3, 4, 5, to 6 may have a shape contracted to the center of the body 110 in the first direction when viewed with respect to the first surface or the second surface. Alternatively, as an edge connecting respective surfaces of the body 110 to each other is rounded by performing an additional process to prevent chipping defects, or the like, the corner connecting the first surface and the third to sixth surfaces and/or a corner connecting the second surface and the third to sixth surfaces may have a rounded shape.

Meanwhile, in order to suppress the step formed by the internal electrodes 121 and 122, after the internal electrodes are cut so as to be exposed to the fifth and sixth surfaces 5 and 6 of the body after stacking, when margin portions 114 and 115 are formed by stacking a single dielectric layer or two or more dielectric layers on both side surfaces of a capacitance formation portion Ac in a third direction (width direction), a portion connecting the first surface to the fifth and sixth surfaces and a portion connecting the second surface to the fifth and sixth surfaces may not have a contracted form.

The third and fourth surfaces of the body may be comprised of an exposed portion EP in which the internal electrodes 121 and 122 and the dielectric layer 111 are alternately exposed, and a non-exposed portion NEP other than the exposed portion.

The first internal electrode 121 and the dielectric layer may be alternately exposed in the exposed portion EP of the third surface 3 of the body, and the second internal electrode 122 and the dielectric layer 111 may be alternately exposed in the exposed portion EP of the fourth surface 4 of the body. In addition, the exposed portion EP may refer to a region from the internal electrodes 121 and 122 located at the top in the first direction to the internal electrodes 121 and 122 located at the bottom in the first direction. Meanwhile, in the present disclosure, the first, second, fifth and sixth surfaces of the body may be generally flat surfaces, and the third and fourth surfaces may include corners connecting the first, second, fifth, and sixth surfaces.

A plurality of dielectric layers 111 for forming the body 110 may be in a sintered state, and adjacent dielectric layers 111 may be integrated with each other, such that boundaries therebetween may not be readily apparent without using a scanning electron microscope (SEM). The number of stacked dielectric layers does not need to be particularly limited and can be determined considering the size of the stacked electronic component. For example, the body can be formed by stacking 400 or more dielectric layers.

The dielectric layer 111 may be formed by preparing a ceramic slurry containing ceramic powder, an organic solvent, and a binder, applying and drying the slurry on a carrier film to prepare a ceramic green sheet, and then sintering the ceramic green sheet. The ceramic powder is not particularly limited as long as sufficient electrostatic capacitance may be obtained therewith, but for example, barium titanate (BaTiO₃)-based powder may be used as the ceramic powder. For a more specific example, the ceramic powder may be barium titanate (BaTiO₃)-based powder, CaZrO₃-based paraelectric powder, and the like. For more specific examples, the barium titanate (BaTiO₃)-based powder may be, at least one of, BaTiO₃, (Ba₁₋ₓCaₓ) TiO₃ (0<x<1), Ba(Ti_{1-y}Ca_{y})O3 (0<y<1), (Ba₁₋ₓCaₓ) (Ti_{1-y}Zr_{y})O₃ (0<x<1, 0<y<1), and Ba(Ti_{1-y}Zr_{y})O₃ (0<y<1), and the CaZrO₃-based paraelectric powder may be (Ca₁₋ₓSrₓ) (Zr_{1-y}Ti_{y})O₃ (0<x<1, 0<y<1).

Therefore, the dielectric layer 111 may include at least one of BaTiOs, (Ba₁₋ₓCaₓ)TiOs (0<x<1), Ba(Ti_{1-y}Ca_{y})O3 (0<y<1), (Ba₁₋ₓCaₓ) (Ti_{1-y}Zr_{y})O₃ (0<x<1, 0<y<1), Ba(Ti_{1-y}Zr_{y})O₃ (0<y<1), and (Ca₁₋ₓSrₓ) (Zr_{1-y}Ti_{y})O₃ (0<x<1, 0<y<1). In an embodiment, the dielectric layer 111 may include (Ca₁₋ₓSrₓ) (Zr_{1-y}Ti_{y})O₃ (0<x<1, 0<y<1) as a main component.

Meanwhile, when a magnetic material is applied to the body 110 instead of a dielectric material, the multilayer electronic component may function as an inductor. The magnetic material may be, for example, ferrite and/or metallic magnetic particles. When the multilayer electronic component functions as an inductor, the internal electrode may be a coil-type conductor.

In addition, when a piezoelectric material is applied to the body 110 instead of a dielectric material, the multilayer electronic component may function as a piezoelectric element. The piezoelectric material may be, for example, lead zirconate titanate (PZT).

In addition, when a ZnO-based or SiC-based material is applied to the body 110 instead of a dielectric material, the multilayer electronic component may function as a varistor, and when a spinel-based material is applied to the body 110 instead of a dielectric material, the multilayer electronic component may function as a thermistor.

That is, the multilayer electronic component 100 according to an embodiment of the present disclosure may function as an inductor, piezoelectric element, varistor, or thermistor as well as a multilayer ceramic capacitor, by appropriately changing the material or structure of the body 110.

The body 110 may include a capacitance formation portion Ac disposed in the body 110, and including a first internal electrode 121 and a second internal electrode 122 disposed to oppose each other with the dielectric layer 111 interposed therebetween and having capacitance formed therein, and cover portions 112 and 113 formed above and below the capacitance formation portion Ac in the first direction.

In addition, the capacitance formation portion Ac is a portion serving to contribute to capacitance formation of a capacitor, and may be formed by repeatedly stacking a plurality of first and second internal electrodes 121 and 122 with a dielectric layer 111 interposed therebetween.

The cover portions 112 and 113 may include an upper cover portion 112 disposed above the capacitance formation portion Ac in the first direction, and a lower cover portion 113 disposed below the capacitance formation portion Ac in the first direction.

The upper cover portion 112 and the lower cover portion 113 may be formed by stacking a single dielectric layer or two or more dielectric layers on upper and lower surfaces of the capacitance formation portion Ac in a thickness direction, respectively, and the upper cover portion 112 and the lower cover portion 113 may serve to basically prevent damage to the internal electrodes due to physical or chemical stress.

The upper cover portion 112 and the lower cover portion 113 may not include internal electrodes, and may include the same material as that of the dielectric layer 111.

That is, the upper cover portion 112 and the lower cover portion 113 may include a ceramic material, for example, a barium titanate (BaTiO₃)-based ceramic material.

Meanwhile, a thickness of the cover portions 112 and 113 is not particularly limited. For example, a thickness "tc" of the cover portions 112 and 113 may be 100 um or less, 30 um or less, and 20 um or less. Here, an average thickness of the cover portions 112 and 113 means an average thickness of each of the first cover portion 112 and the second cover portion 113.

The average thickness "tc" of the cover portions 112 and 113 may mean a size thereof in the first direction, and may be a value obtained by averaging sizes of the cover portions 112 and 113 in the first direction measured at five points at equally spaced intervals in the second direction in a cross-section of the body 110 in the first and second directions taken from a center of the body 110 in the third direction.

In addition, margin portions 114 and 115 may be disposed on a side surface of the capacitance formation portion Ac.

The margin portions 114 and 115 may include a first margin portion 114 disposed on the fifth surface 5 of the body 110 and a second margin portion 115 disposed on the sixth surface 6 thereof. That is, the margin portions 114 and 115 may be disposed on both end surfaces of the body 110 in a width direction.

The margin portions 114 and 115 may mean a region between both ends of the first and second internal electrodes 121 and 122 and an interface of the body 110 in a cross-section of the body 110 taken in a width-thickness (W-T) plane, as illustrated in FIG. 3.

The margin portions 114 and 115 may serve to prevent damage to the internal electrodes due to physical or chemical stresses.

The margin portions 114 and 115 may be formed by applying a conductive paste to the ceramic green sheet, except where margin portions are to be formed, to form an internal electrode.

In addition, in order to suppress the step formed by the internal electrodes 121 and 122, after the internal electrodes are cut so as to be exposed to the fifth and sixth surfaces 5 and 6 of the body after stacking, the margin portions 114 and 115 may also be formed by stacking a single dielectric layer or two or more dielectric layers on both side surfaces of the capacitance formation portion Ac in the third direction (width direction).

Meanwhile, a width of the margin portions 114 and 115 is not particularly limited. For example, an average width of the margin portions 114 and 115 may be 100 um or less, 20 um or less, or 15 um or less. Here, the average width of the margin portions 114 and 115 means an average thickness of each of the first margin portion 114 and the second margin portion 115.

The average width of the margin portions 114 and 115 may mean an average size of a region in which the internal electrode is spaced apart from the fifth surface in a third (i.e., width) direction and an average size of a region in which the internal electrode is spaced apart from the sixth surface in the third (i.e., width) direction, and may be a value obtained by averaging sizes of the margin portions 114 and 115 in the third direction measured at five points at equally spaced intervals on a side surface of the capacitance formation portion Ac.

The internal electrodes 121 and 122 may include first and second internal electrodes 121 and 122. The first and second internal electrodes 121 and 122 may be alternately disposed to oppose each other with the dielectric layer 111 interposed therebetween to form the body 110, and may be respectively exposed to the third and fourth surfaces 3 and 4 of the body 110.

The first internal electrode 121 may be spaced apart from the fourth surface 4 and exposed through the third surface 3, and the second internal electrode 122 may be spaced apart from the third surface 3 and exposed through the fourth surface 4. A first external electrode 131 may be disposed on the third surface 3 of the body and connected to the first internal electrode 121, and a second external electrode 132 may be disposed on the fourth surface 4 of the body and connected to the second internal electrode 122.

That is, the first internal electrode 121 is not connected to the second external electrode 132 but is connected to the first external electrode 131, and the second internal electrode 122 is not connected to the first external electrode 131 but is connected to the second external electrode 132. Accordingly, the first internal electrode 121 may be formed to be spaced apart from the fourth surface 4 by a predetermined distance, and the second internal electrode 122 may be formed to be spaced apart from the third surface 3 by a predetermined distance. In addition, the first and second internal electrodes 121 and 122 may be disposed to be spaced apart from the fifth and sixth surfaces of the body 110.

The conductive metal included in the internal electrodes 121 and 122 may be at least one Ni, Cu, Pd, Ag, Au, Pt, In, Sn, Al, Ti, and alloys thereof, but the present disclosure is not limited thereto.

An average thickness "td" of the dielectric layer 111 is not particularly limited, but for example, the average thickness "td" of the dielectric layer 111 may be 0.01 to 10 um. An average thickness "te" of the internal electrodes 121 and 122 is not particularly limited, but for example, the average thickness "te" of the internal electrodes 121 and 122 may be 0.05 to 3.0 um. In addition, the average thickness "td" of the dielectric layer 111 and the average thickness "te" of the internal electrodes 121 and 122 may be arbitrarily set according to desired characteristics or purposes.

The average thickness "td" of the dielectric layer 111 and the average thickness "te" of the internal electrodes 121 and 122 mean a size of the dielectric layer 111 and the internal electrodes 121 and 122 in the first direction, respectively. The average thickness "td" of the dielectric layer 111 and the average thickness "te" of the internal electrodes 121 and 122 may be measured by scanning a cross-section of the body 110 in the first and second directions with a scanning electron microscope (SEM) at a magnification of 10,000. More specifically, an average value may be measured by measuring the average thickness "td" of the dielectric layer 111 at multiple points, for example, at 30 points at equally spaced intervals in the second direction. The 30 points at equally spaced intervals may be designated in a capacitance formation portion Ac. Meanwhile, if the average value is measured by extending the average value measurement to 10 dielectric layers 111 and 10 internal electrodes 121 and 122, the average thickness "td" of the dielectric layer 111 and the average thickness "te" of the internal electrodes 121 and 122 can be more generalized.

External electrodes 131 and 132 may be disposed on the body 110. The external electrodes 131 and 132 may include first and second external electrodes 131 and 132 respectively disposed on the third and fourth surfaces 3 and 4 of the body 110 and respectively connected to the first and second internal electrodes 121 and 122.

The external electrodes 131 and 132 may include base electrode layers 131a and 132a, intermediate electrode layers 131b and 132b disposed on the base electrode layers, and upper electrode layers 131c and 132c disposed on the intermediate electrode layers.

In an embodiment, the external electrodes 131 and 132 may include band portions P1b and P2b extending onto a portion of the first surface and a portion of the second surface, and the band portions P1b and P2b may include a portion of the base electrode layers 131a and 132a, a portion of the intermediate electrode layers 131b and 132b, and a portion of the upper electrode layers 131c and 132c. Since the external electrodes 131 and 132 include the band portions P1b and P2b, the external electrodes 131 and 132 can be easily mounted on a substrate. Meanwhile, portions of the external electrodes 131 and 132 disposed on the exposed portion EP of the third and fourth surfaces may be referred to as connection portions P1a and P2a, and regions of the external electrodes 131 and 132, disposed between the extension line E1 of the first surface and the extension line E2 of the second surface, excluding the connection portions, may be referred to as connection portions P1c and P2c.

The following description will focus on the first external electrode 131, but the only difference is that the first external electrode 131 is disposed on the third surface, and the second external electrode 132 is disposed on the fourth surface, and the first external electrode 131 and the second external electrode 132 have similar configurations, so it is considered to include a description of the second external electrode 132.

The base electrode layers 131a and 132a may include a metal and may be disposed on both an exposed portion EP and a non-exposed portion NEP. The base electrode layers 131a and 132a may be in direct contact with the internal electrodes 121 and 122 to serve to electrically connect the external electrodes 131 and 132 and the internal electrodes 121 and 122.

In an embodiment, the base electrode layers 131a and 132a may further include glass. As the base electrode layers 131a and 132a further include glass, bonding force with the body may be improved, thereby improving coupling force between the external electrodes 131 and 132 and the body 110. The base electrode layers 131a and 132a may be sintered electrodes formed by applying and sintering a paste including glass and a metal to the body.

As the metal included in the base electrode layers 131a and 132a, a material with excellent electrical conductivity may be used and the present disclosure is not particularly limited. For example, the metal included in the base electrode layers 131a and 132a may be one or more of nickel (Ni), copper (Cu), and alloys thereof, and more preferably Cu.

The intermediate electrode layers 131b and 132b may include a metal 131b-2 and a resin 131b-1, and may be disposed on the non-exposed portion NEP of the third and fourth surfaces.

The intermediate electrode layers 131b and 132b may be disposed on the non-exposed portion NEP to serve to prevent corner portions of the external electrodes 131 and 132 from being formed to be thin. In addition, as the intermediate electrode layer 131b and 132b include the resin 131b-1, the intermediate electrode layers 131b and 132b may serve to improve bending strength of the multilayer electronic component 100.

The method for forming the intermediate electrode layers 131b and 132b is not limited to a particular method. For example, the intermediate electrode layers 131b and 132b may be formed by applying and curing a paste including the metal 131b-2 and the resin 131b-1 to corner portions of the base electrode layers 131a and 132a.

The intermediate electrode layers 131b and 132b may be further disposed on a portion of the exposed portion EP. That is, the intermediate electrode layers 131b and 132b do not need to only be disposed on the non-exposed portion NEP, and may be disposed to extend from the non-exposed portion NEP onto a portion of the exposed portion EP.

However, it is preferable that the intermediate electrode layers 131b and 132b are not disposed on at least a portion of the exposed portion EP. When the intermediate electrode layers 131b and 132b are disposed on all of the exposed portion EP, the thickness of the external electrode becomes thick, which may reduce capacitance per unit volume of the multilayer electronic component.

The resin 131b-1 included in the interfacial electrode layers 131b and 132b may include a thermosetting resin having electrical insulation properties.

In this case, the thermosetting resin may be, for example, an epoxy resin, but the present disclosure is not limited thereto, and may be, for example, a bisphenol A resin, glycol epoxy resin, Noblock epoxy resin, or a derivative thereof that has a low molecular weight and is liquid at room temperature.

In an embodiment, the metal 131b-2 included in the intermediate electrode layers 131b and 132b may contain Ag.

In general, in the case of a conductive resin layer including a metal and a resin, a problem of weak electrical conductivity may occur because the metal included in the conductive resin layer is dispersed in the form of particles within the conductive resin layer. Ag has high electrical conductivity, so even if Ag is dispersed in the form of particles within the intermediate electrode layers 131b and 132b, a decrease in equivalent series resistance (ESR) can be suppressed. However, Ag is known to be metal in which ion migration occurs most easily. Ion migration means that when a voltage is applied, metal ions move and precipitate into metal dendrites. If ion migration occurs, cracks may occur in the plating layer and body of the external electrode, and deterioration of insulation resistance due to current leakage and short circuit between the first external electrode 131 and the second external electrode 132 may occur. According to an embodiment of the present disclosure, as the upper electrode layers 131c and 132c containing Sn and a resin are disposed on the intermediate electrode layers 131b and 132b, even if the intermediate electrode layers 131b and 132b contains Ag, the occurrence of ion migration may be minimized and ESR may be suppressed from being lowered. Since Sn contained in the upper electrode layers 131c and 132c has a low melting point, an intermetallic compound may be easily formed even at a curing temperature of the upper electrode layers 131c and 132c, and the intermetallic compound of the upper electrode layers 131c and 132c may serve to suppress the movement of Ag in the intermediate electrode layers 131b and 132b.

In addition, when the metal included in the base electrode layers 131a and 132a is Cu, the intermediate electrode layers 131b and 132b contains Ag, having a higher standard reduction potential, as compared to Cu contained in the base electrode layers 131a and 132a, it can prevent oxidation of the base electrode layers 131a and 132a and prevent moisture from penetrating thereinto. In addition, when the metal included in the base electrode layers 131a and 132a is Cu, a Cu-Ag alloy layer may be formed at an interface between the intermediate electrode layers 131b and 132b and the base electrode layers 131a and 132a, so that mechanical coupling force and electrical connectivity of the base electrode layers 131a and 132a and the intermediate electrode layers 131b and 132b may be improved, and moisture resistance reliability may be further improved.

A metal 131b-2 included in the intermediate electrode layers 131b and 132b may exist in the form of metal particles. The metal included in the intermediate electrode layers 131b and 132b may exist in the form of a plurality of metal particles 131b-2 randomly dispersed. In addition, as illustrated in FIG. 7, the plurality of metal particles 131b-2 may be a mixture of spherical particles SP and flake-type particles FP. Accordingly, electrical conductivity of the intermediate electrode layers 131b and 132b may be further improved. However, the present disclosure is not limited thereto, and the plurality of metal particles 131b-2 may be formed of only spherical particles SP or may be formed of only flake-shaped particles FP.

An average size of the metal particles 131b-2 does not need to be particularly limited. For example, the average size of the metal particles 131b-2 may be 0.2 to 20 um. Meanwhile, the average size of the metal particles 131b-2 may be measured from an image obtained by scanning the cross-section of the body 110 in the first and second directions (L-T cross-section) taken from the central portion of the body in the third direction using an SEM. The size of 10 or more metal particles 131b-2 may be taken as an average value from the above-described image. Meanwhile, assuming a circle having the same area as an area of the corresponding metal particle 131b-2, the size of one metal particle 131b-2 may be set to be a diameter of the virtual circle as the size of the metal particle 131b-2.

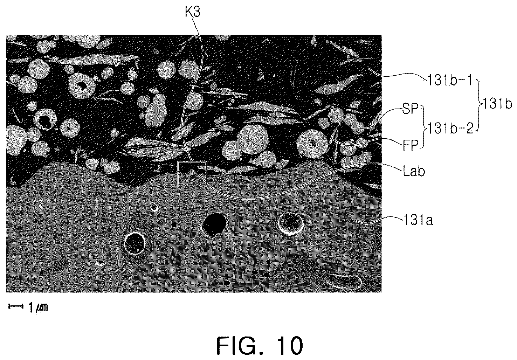

FIG. 10 is an image scanned with a scanning electron microscope (SEM) of area K2 of FIG. 2. Referring to FIG. 10, it can be confirmed that the plurality of metal particles 131b-2 are a mixture of spherical particles (SP) and flake-shaped particles (FP) and are randomly dispersed and disposed.

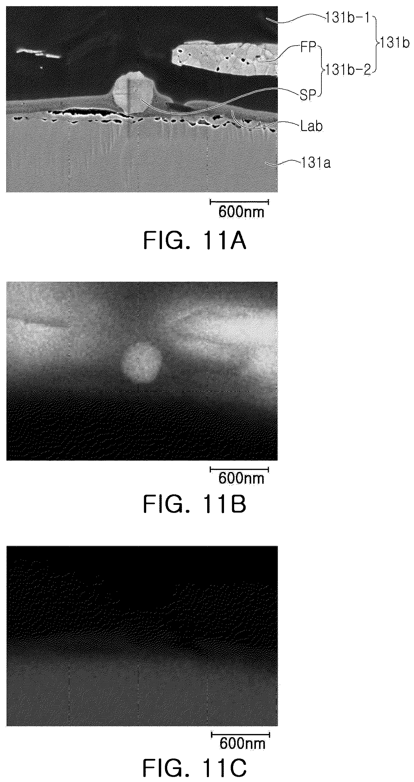

In addition, it can be confirmed that a first alloy layer Lab is disposed at an interface of the base electrode layer 131a and the intermediate electrode layer 131b. Referring to FIG. 11(a), an enlarged image of area K3 of FIG. 10, the first alloy layer (Lab), which can be distinguished by a light and dark difference from the metal particles 131b-2 of the base electrode layer 131a and the intermediate electrode layer 131b, is clearly observed.

FIG. 11(b) is an image of a content of Ag element analyzed by SEM-EDS in the area K3 of FIG. 10, and FIG. 11(c) is an image of a content of Cu element analyzed by SEM-EDS in the area K3 of FIG. 10. Referring to FIGS. 11(b) and 11(c), it can be confirmed that the first alloy layer (Lab) is a Cu-Ag alloy.

Therefore, in an embodiment, a first alloy layer (Lab) including a Cu-Ag alloy may be disposed at an interface between the base electrode layers 131a and 132a and the intermediate electrode layers 131b and 132b. The first alloy layer (Lab) may be formed by mutual diffusion of Cu contained in the base electrode layers 131a and 132a and Ag contained in the intermediate electrode layers 131b and 132b by heat treatment of the intermediate electrode layers 131b and 132b, heat treatment of the upper electrode layers 131c and 132c, or a separate heat treatment process. In this case, the Cu-Ag alloy may be one or more of Ag₁₅Cu₆ and Ag₁₁Cu₄.

The first alloy layer Lab may serve to improve mechanical coupling force and electrical connectivity of the base electrode layers 131a and 132a and the intermediate electrode layers 131b and 132b, and accordingly, the first alloy layer Lab may further improve the effect of lowering the ESR of the present disclosure.

Meanwhile, a thickness of the first alloy layer Lab is not particularly limited, but may be, for example, 10 nm or more and 500 nm or less.

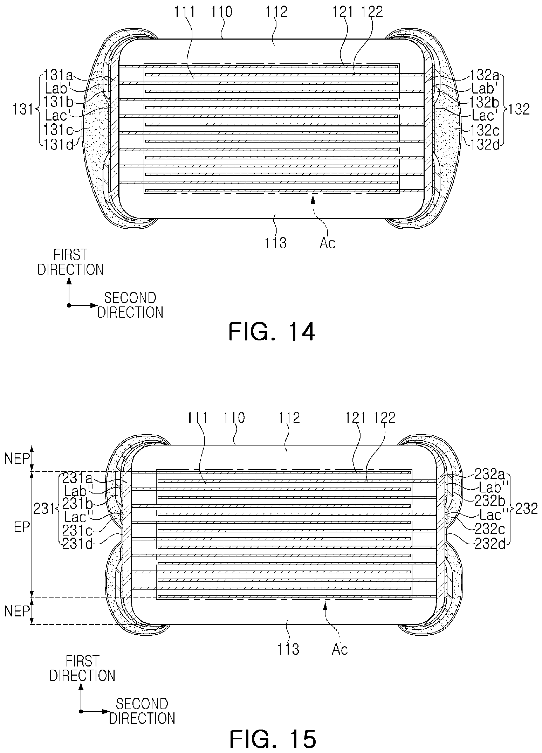

In an embodiment, the first alloy layer Lab may be discontinuously disposed at an interface between the base electrode layers 131a and 132a and the intermediate electrode layers 131b and 132b. However, the present disclosure is not limited thereto and as shown in FIG. 14, a first alloy layer Lab' may be observed as a single layer.

In an embodiment, when a length from an extension line E1 of the first surface to an extension line E2 of the second surface in the first direction is T, and the sum of lengths of the intermediate electrode layers 131b and 132b disposed between the extension line E1 of the first surface and the extension line E2 of the second surface in the first direction is BS, BS/T may be 0.2 or more and 0.6 or less.

When BS/T is less than 0.2, there may be a risk that the effect of improving moisture resistance reliability according to the present disclosure may be insufficient, and when BS/T exceeds 0.6, the thickness of the external electrode may become too thick and capacitance per unit volume may decrease.

Referring to FIG. 5, BS may be measured from a cross-section of the body in the first and second directions cut from a center of the body in the third direction, and BS means the sum of BS1, which is a length from the extension line E1 of the first surface to a region in which the intermediate electrode layer is disconnected in the first direction and BS2, which is a length from the extension line E2 of the second surface to a region in which the intermediate electrode layer is disconnected in the first direction. FIG. 5 illustrates the first external electrode 131, but the second external electrode 132 may also be measured in the same manner.

Here, in a cross-section of the multilayer electronic component 100 in length-thickness directions (L-T cross-section) taken from a center thereof in a width direction, when seven straight lines having a uniform interval from the third surface 3 to the fourth surface 4 in a length direction, for the extension line E1 of the first surface, a straight line passing through a point, at which the straight line P2 and the second surface 2 meet, and a point at which the third straight line and the first surface meet and a point at which the fifth strength line and the first surface meet, may be defined as the extension line E1 of the first surface. The extension line E2 of the second surface may also be defined in the same manner as the extension line of the first surface, based on the second surface.

In an embodiment, one end of the intermediate electrode layers 131b and 132b in the band portions P1b and P2b may be disposed to cover one ends of the base electrode layers 131a and 132a. Accordingly, bending strength of the multilayer electronic component can be further improved, and moisture resistance reliability can be further improved by hermetic sealing the base electrode layers 131a and 132a together with the upper electrode layers 131c and 132c.

In this case, the other ends of the intermediate electrode layers 131b and 132b may be disposed on the exposed portion EP. However, the present disclosure is not limited thereto, and the other ends of the intermediate electrode layers 131b and 132b may also be disposed on the non-exposed portion NEP.

The upper electrode layers 131c and 132c include Sn (131c-2) and a resin (131c-1), and may be disposed on the non-exposed portions NEP of the third and fourth surfaces. The upper electrode layers 131c and 132c may improve the bending strength of the multilayer electronic component 100, and play a role in minimizing ion migration caused by the included in the intermediate electrode layers 132b and 132b.

In an embodiment, the upper electrode layers 131c and 132c may be further disposed on the exposed portion EP. That is, like the base electrode layers 131a and 132a, the upper electrode layers 131c and 132c may be disposed on both the non-exposed portion NEP and the exposed portion EP.

The resin 131c-1 included in the upper electrode layers 131c and 132c may include a thermosetting resin having electrical insulation properties.

In this case, the thermosetting resin may be, for example, an epoxy resin, but the present disclosure is not limited thereto, and may be, for example, a bisphenol A resin, glycol epoxy resin, Noblock epoxy resin, or a derivative thereof, which has a low molecular weight and is liquid at room temperature.

In addition, the resin 131c-1 included in the upper electrode layers 131c and 132c may be the same type of resin as the resin 131b-1 included in the intermediate electrode layers 131b and 132b, but the present disclosure is not limited thereto. The resin 131c-1 included in the upper electrode layers 131c and 132c may be of a different type from the resin 131b-1 included in the intermediate electrode layers 131b and 132b.

In an embodiment, the upper electrode layers 131c and 132c may include an intermetallic compound containing Sn. That is, at least a portion of Sn(131c-2) may exist in the form of an intermetallic compound.

In general, in the case of a conductive resin layer formed by applying and curing a paste including a metal and a resin, a melting point of the metal is higher than a curing temperature of the resin, so the metal is generally included in the form of metal particles. On the other hand, according to an embodiment of the present disclosure, since the upper electrode layers 131c and 132c contain Sn with a low melting point, Sn may melt even at the curing temperature of the upper electrode layers 131c and 132c to easily form an intermetallic compound. The intermetallic compound of the upper electrode layers 131c and 132c may play a role in minimizing the occurrence of ion migration by suppressing the movement of Ag in the intermediate electrode layers 131b and 132b.

Meanwhile, in the case of a conductive resin layer containing Sn and resin, since Sn is melted during the curing process, a corner portion could become thinner after the curing process than when applied before the curing process, and there may be a risk that moisture resistance reliability would be reduced accordingly. That is, as compared to a conductive resin layer not containing Sn, when forming a conductive resin layer including Sn and a resin on a sintered electrode, it was necessary to apply the conductive resin layer to be thicker to secure a thickness of the corner portion. On the other hand, according to an embodiment of the present disclosure, since the intermediate electrode layers 131b and 132b are disposed on the non-exposed portion NEP, the moisture resistance reliability may be secured even without thick application of the upper electrode layers 131c and 132c including Sn and a resin.

The intermetallic compounds containing Sn of the upper electrode layers 131c and 132c may be, for example, a tin (Sn)-bismuth (Bi) alloy, tin (Sn)-lead (Pb) alloy, Tin (Sn)-Lead (Pb) alloy, Tin (Sn)-Copper (Cu) alloy, Tin (Sn)-Silver (Ag) alloy, Tin (Sn)-Silver (Ag)-copper (Cu) alloy, and the like.

In addition, as shown in FIG. 6, Sn (131c-2) may be observed to be widely spread and connected to each other when observing a cross-section of the upper electrode layers 131c and 132c. Therefore, electrical connectivity can be improved and ESR can be lowered as compared to the case in which the metal exists only in the form of metal particles in the conductive resin layer.

In addition, the intermetallic compound 131c-2 containing Sn can minimize internal stress within the body 110 and improve high temperature load and moisture resistance characteristics.

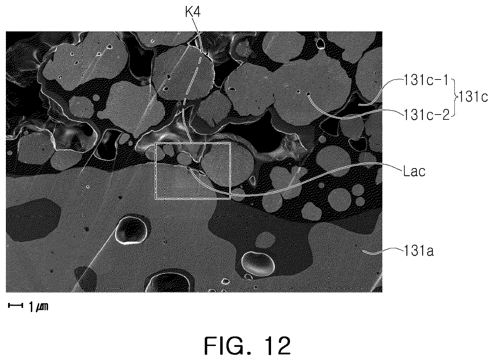

FIG. 12 is an image of the area K1 of FIG. 2 scanned with a scanning electron microscope. Referring to FIG. 12, it can be seen that Sn (131c-2) is observed not in the form of metal particles but in a widely spread and interconnected form.

In an embodiment, a second alloy layer (Lac) including a Cu-Sn alloy may be disposed at an interface between the base electrode layer 131a and the upper electrode layer 131c.

The second alloy layer (Lac) may be formed by mutual diffusion of Cu contained in the base electrode layers 131a and 132a and Sn contained in the intermediate electrode layers 131b and 132b by a hardening heat treatment of the upper electrode layers 131c and 132c or a separate heat treatment process.

The second alloy layer Lac may serve to improve the mechanical coupling force and electrical connectivity between the base electrode layers 131a and 132a and the upper electrode layers 131c and 132c, and accordingly, the effect of lowering ESR of the present disclosure may be further improved.

In this case, the Cu-Sn alloy of the second alloy layer Lac may be Cu₃Sn. When the intermetallic compound 131c-2 of the upper electrode layer is Cu₃Sn, it may be difficult to distinguish between the second alloy layer (Lac) and the intermetallic compound 131c-2.

In an embodiment, the second alloy layer (Lac) may be discontinuously disposed at the interface between the base electrode layers 131a and 132a and the upper electrode layers 131c and 132c. However, the present disclosure is not limited thereto, and as shown in FIG. 14, the second alloy layer (Lac') may be observed as a single layer.

Meanwhile, the thickness of the second alloy layer (Lab) does not need to be specifically limited, but may be, for example, 10 nm or more and 500 nm or less.

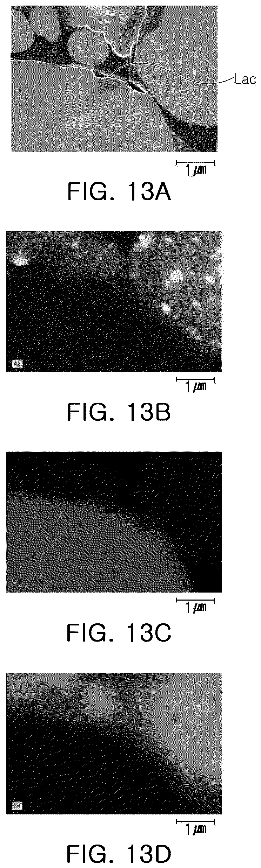

FIG. 13(a) is an enlarged image of area K4 of FIG. 12, FIG. 13(b) is an image of a content of Ag element analyzed by SEM-EDS in the area K4 of FIG. 12, FIG. 13(c) is an image of a content of Cu element analyzed by SEM-EDS in the area K4 of FIG. 12, and FIG. 13(d) is an image of a content of Sn element analyzed by SEM-EDS in the area K4 of FIG. 12. Referring to FIGS. 13(a) to 13(d), it can be confirmed that a second alloy layer (Lac) including a Cu-Sn alloy is disposed at an interface between the base electrode layer 131a and the upper electrode layer 131c. In addition, it can be confirmed that at least a portion of Sn(131c-2) forms an intermetallic compound with Ag and exists in the form of a tin (Sn)-silver (Ag) alloy.

Meanwhile, the metal included in the upper electrode layers 131c and 132c is not limited to Sn (131c-2) and intermetallic compounds containing Sn.

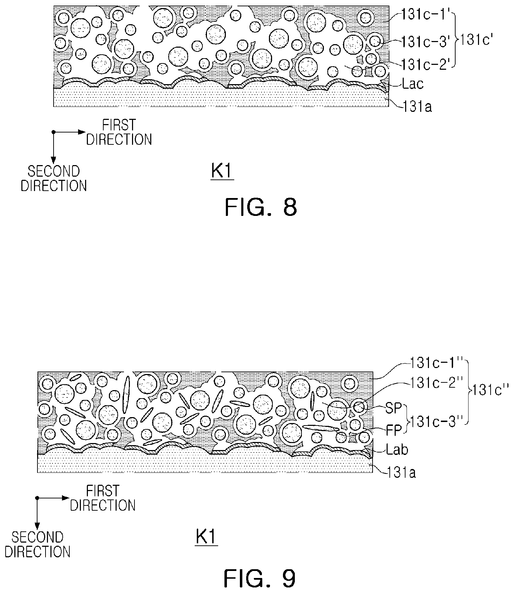

Referring to FIG. 8, in an embodiment, the upper electrode layers 131c' and 132c' may further include a plurality of metal particles (131c-3'), and Sn (131c-2') may be disposed to connect at least a portion of the plurality of metal particles (131c-3') . That is, the upper electrode layers 131c' and 132c' may include a plurality of metal particles (131c-3'), and Sn (131c-2') and resin (131c-1') disposed to connect at least a portion of the plurality of metal particles (131c-3').

In this case, the plurality of metal particles (131c-3') may include one or more of Ag and Cu. In addition, at least a portion of Sn (131c-2') may exist in the form of an intermetallic compound, for example, in one or more of Ag₃Sn, Cu₆Sn₅, and Cu₃Sn.

Sn(131c-2') may serve to improve electrical connectivity by connecting at least a portion of a plurality of metal particles. In addition, even if the plurality of metal particles (131c-3') contain Ag, ion migration may be suppressed by Sn(131c-2'). Sn(131c-2') may be disposed to surround at least a portion of the plurality of metal particles (131c-3'). In addition, since at least a portion of Sn(131c-2') exists in the form of an intermetallic compound, internal stress within the body 110 can be minimized and high temperature load and moisture resistance characteristics can be improved.

In this case, the intermetallic compound may be an intermetallic compound between a low-melting point metal and metal particles. The low-melting point metal included in the conductive resin layer paste may be partially melted during the drying and hardening heat treatment process and form an intermetallic compound with a portion of the metal particles.

For a more specific example, the low melting point metal may be one or more types selected from Sn, Sn_{96.5}Ag_{3.0}Cu_{0.5}, Sn₄₂Bi₅₈, and Sn₇₂Bi₂₈. After applying a paste for a conductive resin layer to the body, Sn may be melted during a drying and curing process, and the melted Sn may wet metal particles with a high melting point such as Ag or Cu through capillary action, and Ag or Cu may react with a portion of the metal particles to form intermetallic compounds such as Ag₃Sn, Cu₆Sn₅, Cu₃Sn, and the like. Ag or Cu that did not participate in the reaction remains in the form of metal particles 131c-3', as illustrated in FIG. 6.

Since Sn (131c-2') is disposed to connect at least a portion of the plurality of metal particles (131c-3'), electrical connectivity may be sufficiently secured even if the metal particles (131c-3') exist only as spherical-type particles. Accordingly, the metal particles 131c-3' may be comprised of only spherical particles. However, there is no need to be limited thereto, and as shown in FIG. 9, the upper electrode layer 131c' ' may include a plurality of metal particles 131c-3'' in which spherical particles SP and flake-type particles (FP) are mixed, and Sn (131c-2") and a resin (131c-1" ') disposed to connect at least a portion of the plurality of metal particles (131c-3''). In addition, the metal particles may comprise only flake-type particles.

In an embodiment, the upper electrode layers 131c and 132c may be disposed to cover the intermediate electrode layers 131b and 132b. As the upper electrode layers 131c and 132c are disposed to cover the intermediate electrode layers 131b and 132b, the effect of minimizing ion migration may be further improved.

FIG. 2 illustrates that the upper electrode layers 131c and 132c cover both an exposed portion EP and a non-exposed portion NEP of the third and fourth surfaces and have a convex shape, but the present disclosure is not limited thereto.

For example, as illustrated in FIG. 15, the external electrodes 231 and 232 may have a concave shape on the non-exposed portion NEP. The base electrode layers 231a and 232a may be disposed on the exposed portion EP and the non-exposed portion NEP, the intermediate electrode layers 231b and 232b may be disposed on the non-exposed portion NEP, and the upper electrode layers 231 and 232c may be disposed on the exposed portion EP and the non-exposed portion NEP, but may not be disposed on at least a portion of the exposed portion EP. As the upper electrode layers 231c and 232c cover the intermediate electrode layers 231b and 232b, the occurrence of ion migration can be minimized and a decrease in ESR can be suppressed.

In addition, the plating layers 231d and 232d may contact the base electrode layers 231a and 232a on at least a portion of the exposed portion EP in which the upper electrode layers 231c and 232c are not disposed, and a second alloy layer Lac'' may not be disposed on at least a portion of the exposed portion EP in which the upper electrode layers 231c and 232c are not disposed.

Referring to FIG. 5, in an embodiment, a maximum thickness "t3" of the upper electrode layer 131c may be 10 um or more and 30 um or less.

When the maximum thickness "t3" of the upper electrode layer 131c is less than 10 µm, the upper electrode layer 131c may not cover a portion of the intermediate electrode layer 131b, so that there may be a risk that an effect of suppressing ion migration is insufficient. When the maximum thickness "t3" of the upper electrode layer 131c exceeds 30 µm, the thickness of the external electrode becomes too thick, and there may a risk that the capacitance per unit volume of a multilayer electronic component decreases.

Referring to FIG. 5, in an embodiment, when the maximum thickness of the base electrode layer 131a is t1, the maximum thickness of the intermediate electrode layer 131b is t2, and the maximum thickness of the upper electrode layer 131c is t3, t2 < t1 < t3 can be satisfied. Accordingly, the effect of lowering ESR and suppressing ion migration while securing bending strength and moisture resistance reliability can be further improved.

In an embodiment, the base electrode layers 131a and 132a may include Cu as a metal component, the intermediate electrode layers 131b and 132b may include Ag as a metal component, and the upper electrode layers 131c and 132c may include Cu and Sn as a metal component. Accordingly, the ion migration of Ag contained in the intermediate electrode layers 131b and 132b can be further suppressed while the ESR can be further lowered.

In addition, the base electrode layers 131a and 132 may contain Cu as a main metal component, the intermediate electrode layers 131b and 132b may include Ag as a main metal component, and the upper electrode layers 131c and 132c may include Cu and Sn as main metal components. Here the fact that the base electrode layers 131a and 132a include Cu as a main metal component may mean that an area occupied by the Cu element out of an area occupied by all metal elements in the baes electrode layers 131a and 132a is 80% or more, when analysis of elements of the base electrode layers 131a and 132a is performed in a cross-section of the base electrode layers 131a and 132a in the first and second directions analyzed by SEM-EDS.

In addition, the metal components contained in the intermediate electrode layers 131b and 132b may be in the form of metal particles, and at least a portion of the metal components included in the upper electrode layers 131c and 132c may be in the form of an intermetallic compound.

In an embodiment, the external electrodes 131 and 132 may further include plating layers 131d and 132d disposed on the upper electrode layers.

The plating layers 131d and 132d serve to improve mounting characteristics. The type of the plating layers 131d and 132d is not particularly limited, and may be plating layers containing one or more of Ni, Sn, Pd, and alloys thereof, and may be formed of a plurality of layers.

For a more specific example of the plating layers 131d and 132d, the plating layers 131d and 132d may be a Ni plating layer or a Sn plating layer, and have a form in which the Ni plating layer and Sn plating layer are sequentially formed on the upper electrode layers 131c and 132c, and have a form in which the Sn plating layer, the Ni plating layer, and the Sn plating layer are sequentially formed thereon. In addition, the plating layers 131d and 132d may include a plurality of Ni plating layers and/or a plurality of Sn plating layers.

As set forth above, as one of the many effects of the present disclosure, reliability of a multilayer electronic component may be improved by disposing an intermediate electrode layer including a metal and a resin between an upper electrode layer including Sn and a resin and a base electrode layer.

As one of the many effects of the present disclosure, moisture resistance reliability of a multilayer electronic component may be improved.

As one of the many effects of the present disclosure, equivalent series resistance (ESR) of a multilayer electronic component may be lowered.

As one of the many effects of the present disclosure, bending strength of a multilayer electronic component may be improved.

Although the embodiments of the present disclosure have been described in detail above, the present disclosure is not limited by the above-described embodiments and the accompanying drawings, and is intended to be limited by the appended claims. Therefore, various forms of substitution, modification, and change will be possible by those skilled in the art within the scope of the technical spirit of the present disclosure described in the claims, which also falls within the scope of the present disclosure.

In addition, the expression 'one embodiment' used in the present disclosure does not mean the same embodiment, and is provided to emphasize and describe different unique characteristics. However, one embodiment presented above is not excluded from being implemented in combination with features of another embodiment. For example, even if a matter described in one specific embodiment is not described in another embodiment, it can be understood as a description related to another embodiment, unless there is a description contradicting or contradicting the matter in the other embodiment.

Terms used in this disclosure are only used to describe one embodiment, and are not intended to limit the disclosure. In this case, singular expressions include plural expressions unless the context clearly indicates otherwise.

While example embodiments have been shown and described above, it will be apparent to those skilled in the art that modifications and variations could be made without departing from the scope of the present invention as defined by the appended claims.

## Claims

1. A multilayer electronic component, comprising:
a body including a dielectric layer and an internal electrode alternately disposed with the dielectric layer, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction; and
an external electrode disposed on the body and including a base electrode layer comprising a first metal, an intermediate electrode layer disposed on the base electrode layer and comprising a second metal and a first resin, and an upper electrode layer disposed on the intermediate electrode layer and comprising Sn and a second resin,
wherein the third and fourth surfaces of the body include an exposed portion in which the dielectric layer and the internal electrode are alternately exposed and a non-exposed portion other than the exposed portion, and
the base electrode layer is disposed on the exposed portion and the non-exposed portion, the intermediate electrode layer is disposed on the non-exposed portion, and the upper electrode layer is disposed on the non-exposed portion.

2. The multilayer electronic component of claim 1, wherein the external electrode comprises a band portion extending onto a portion of the first surface and a portion of the second surface, and
the band portion comprises a portion of the base electrode layer, a portion of the intermediate electrode layer, and a portion of the upper electrode layer.

3. The multilayer electronic component of claim 1, wherein the intermediate electrode layer is further disposed on at least a portion of the exposed portion.

4. The multilayer electronic component of claim 1, wherein the second metal includes Ag.

5. The multilayer electronic component of claim 1, wherein a first alloy layer including a Cu-Ag alloy is disposed at an interface between the base electrode layer and the intermediate electrode layer.

6. The multilayer electronic component of claim 1 or claim 5, wherein a second alloy layer including a Cu-Sn alloy is disposed at an interface between the base electrode layer and the upper electrode layer.

7. The multilayer electronic component of claim 6, wherein the second alloy layer is discontinuously disposed at the interface between the base electrode layer and the upper electrode layer.

8. The multilayer electronic component of claim 1, wherein the base electrode layer further includes glass.

9. The multilayer electronic component of claim 2, wherein one end of the intermediate electrode layer in the band portion is disposed to cover one end of the base electrode layer.

10. The multilayer electronic component of claim 9, wherein an other end of the intermediate electrode layer is disposed on the exposed portion.

11. The multilayer electronic component of claim 1, wherein, when a length from an extension line of the first surface to an extension line of the second surface in a first direction is T, and a sum of lengths of the intermediate electrode layer disposed between the extension line of the first surface and the extension line of the second surface in the first direction is Bs, Bs/T is 0.2 or more and 0.6 or less.

12. The multilayer electronic component of claim 1, wherein the upper electrode layer comprises an intermetallic compound containing Sn.

13. The multilayer electronic component of claim 1, wherein the upper electrode layer further comprises a plurality of metal particles, and
Sn is disposed to connect at least a portion of the plurality of metal particles.

14. The multilayer electronic component of claim 1, wherein a maximum thickness of the upper electrode layer is 10 µm or more and 30 µm or less.

15. The multilayer electronic component of claim 1, wherein, when a maximum thickness of the base electrode layer is t1, a maximum thickness of the intermediate electrode layer is t2, and a maximum thickness of the upper electrode layer is t3, t2 < t1 < t3 is satisfied.
